# EUROPEAN PATENT APPLICATION

(11) **EP 3 096 030 A1**
(43) Date of publication of application: **23.11.2016**
(21) Application number: 14877470.6
(22) Date of filing: 30.12.2014
(51) Int. Cl.: F16C 32/04

(54) **PIVOTING MICRO-FRICTION OR FRICTION-FREE RADIAL PERMANENT MAGNET FLOATING BEARING**

(30) Priority: 30.12.2013 CN 201310743494
(71) Applicant: Li, Guokun, Lanzhou, Gansu 730030 (CN); Wang, Chaoxian, Lanzhou, Gansu 730030 (CN)
(72) Inventor: Li, Guokun, Lanzhou, Gansu 730030 (CN); Wang, Chaoxian, Lanzhou, Gansu 730030 (CN)
(74) Representative: Grünecker Patent- und Rechtsanwälte PartG mbB
(86) International application number: PCT/CN2014/095478
(87) International publication number: WO 2015/101276

(57) **Abstract**

A radial permanent magnetic suspension bearing, comprising: a horizontal shaft (2), a support bearing (4), and a radial permanent magnet suspension bearing (3); the permanent magnetic suspension bearing (3) comprises a stator pull-push magnet (31) disposed on a stator casing (1) via a permeability magnetic substrate (322), and a rotor pull-push magnet (32) disposed on the horizontal shaft (2) correspondingly via an annular permeability magnetic substrate (322), having a radial gap and forming an axial pull-push magnetic circuit with the stator pull-push magnet (31); wherein the rotor pull-push magnet (32) consists of two or more annual permanent magnets axially and closely fitting, with magnetic poles alternately arranged in the axial direction; the stator pull-push magnet (31) consists of two or more annular permanent magnets axially and closely fitting, with magnetic poles alternately arranged in the axial direction, disposed over the horizontal panel where the axle center of the horizontal shaft (2) is located, and being symmetrical about the perpendicular bisection plane of the horizontal shaft. The bearing has a simple structure and greatly reduces energy consumption, without wear or bearing maintenance.

## Description

### Technical Field of the Invention

The present invention relates to a bearing, particularly, to a radial permanent magnetic suspension bearing with pivot point.

### Background Art

The invention CN 01136634.6, titled as *magnetic suspension bearing*, and submitted by the first inventor of the present application in 2001, relates to a solution in which permanent magnets are used to constitute a pull-push magnetic circuit so as to form a magnetic suspension bearing without pivot point. The invention CN 200710099004.X submitted in 2007, titled as *Repel push magnetic body component, compete permanent magnetism complete suspending bearing as well as combined wind powder photovoltaic power generation system*, discloses a solution in which permanent magnets are used to constitute a pull-push magnetic circuit so as to form a magnetic suspension bearing without pivot point.

However, as to a radial bearing, the pull-push magnetic circuit used for the complete permanent magnetism and complete suspension solution, as disclosed in patent No. CN 01136634.6 is complicated in structure, rendering it difficult to adjust suspension. In the prior art, a partial permanent magnetic suspension (not complete permanent magnetic suspension) bearing is usually applied, however it is large in volume and heavy in weight for many mechanical transmission systems with rotation speed of 50,000 rpm or below, since the supporting force from the permanent magnetic suspension bearing is small and hence takes a small account of the supporting action to the shaft and load.

### Summary

The present invention proposes a radial permanent magnetic suspension bearing with pivot point which is simple in structure, facilitates assembly, and hence in which the permanent magnetic suspension bearing takes a large account of supporting and generates a large supporting force, so as to achieve the micro-fiction or no friction, to overcome the problems associated with the prior art radial complete permanent magnetic suspension bearing has complicated structure and difficulties in assembly, and the problems associated with the prior art radial non-complete permanent magnetic suspension bearing has a large volume and heavy weight due to small supporting force and small account taken by the permanent magnetic suspension bearing.

The technical solutions of the present invention are as follows:

A radial permanent magnetic suspension bearing having micro-friction or no friction of pivot point, comprising a support bearing as pivot point disposed on a horizontal shaft, and a permanent magnetic suspension bearing disposed on the horizontal shaft and spaced from the support bearing by an axial distance, wherein
the permanent magnetic suspension bearing comprises a stator pull-push magnet disposed on a stator casing via a permeability magnetic substrate, and a rotor pull-push magnet disposed on the horizontal shaft correspondingly via a annular permeability magnetic substrate, having a radial gap and forming an axial pull-push magnetic circuit with the stator pull-push magnet; wherein the rotor pull-push magnet consists of two or more annual permanent magnets axially and closely fitting, with magnetic poles alternately arranged in the axial direction; wherein the stator pull-push magnet consists of two or more partial annular permanent magnets axially and closely fitting, with magnetic poles alternately arranged in the axial direction, disposed over the horizontal panel where the axle center of the horizontal shaft is located, and being symmetrical about the perpendicular bisection plane of the horizontal shaft; and wherein the partial annular permanent magnets and the annular permanent magnets, which are located at a same axial location and corresponds to each other in the up-down direction, have opposite polarities of magnetic pole; and the radial gap is within an effective range of magnetic force of the two pull-push magnets; the permeability magnetic substrate of said stator pull-push magnet matches with the partial annular permanent magnets constituting said stator pull-push magnet in the circumferential direction; a complementary annular member, which is complementary to a partial annular member constituted by the stator pull-push magnet and the permeability magnetic substrate thereof to form a annular cylinder, is made of non-magnetic material.

The partial annular permanent magnets and the annular permanent magnets, which are located at a same axial location and corresponds to each other in the up-down direction, have a same axial width.

The partial annular permanent magnets and the annular permanent magnets, which are located at a same axial location and corresponds to each other in the up-down direction, have a same radial thickness.

The axial lengths of the permeability magnetic substrates of the two pull-push magnets equal to the axial lengths of the two pull-push magnets fixed thereon, respectively.

The central angle of the partial annular permanent magnet constituting the stator pull-push magnet ranges from 100° to 160°.

Preferably, said central angle is 120°.

There exist two said support bearings, which are respectively disposed at two sides of one said permanent magnetic suspension bearing with the axial distance therebetween.

There exist two said permanent magnetic suspension bearings, which are respectively disposed at two sides of one said support bearing with the axial distance therebetween.

There exist three or four said annular permanent magnets, and there exist three or four corresponding partial annular permanent magnets.

The permeability magnetic substrate is made of soft magnetic material, preferably, made of A3 steel.

Each of said partial annular permanent magnets axially and closely fitting has a same axial width and radial thickness; and each of said annular permanent magnets axially and closely fitting has a same axial width and radial thickness.

The advantages of the present invention are as follows.

According to the present invention, a stator pull-push magnet and a rotor pull-push magnet, which constitute an axial pull-push magnetic circuit, are disposed on a stator casing and a horizontal shaft, respectively. Particularly, the stator pull-push magnet is only disposed above the horizontal plane where the axle center of the horizontal shaft (that is, the upper half ring) is located. In this way, the amount of permanent magnet that would be otherwise used is greatly decreased, and the suction force in the upward direction is remarkably increased. In this way, the radial permanent magnetic suspension bearing is simply in the structure, facilitates production and assemble. Furthermore, its support force is relative large. Therefore, the load to the mechanical support bearing is greatly decreased, such that the support from the magnetic suspension bearing accounts more than otherwise. Furthermore, the radial gap may be adjusted, according to the load, so as to achieve micro-friction or no friction.

### Brief Description of the Drawings

Figure 1 is the schematic structural view according to the present invention;
Figure 2 is the view of Fig. 1 as seen from direction of A;
Figure 3 shows an embodiment according to the present invention with one support bearing and two permanent magnetic suspension bearings;
Figure 4 shows another embodiment according to the present invention with two support bearings and one permanent magnetic suspension bearing;
   wherein,
   1 - stator casing
   2- horizontal shaft
   3- permanent magnetic suspension bearing
   31- stator pull-push magnet
   32 - rotor pull-push magnet
   322-permeability magnetic substrate
   33 - complementary annular member
   4 - support bearing

### Detailed Description of the Embodiments

Hereinafter the invention will be further explained with reference to the accompanying figures.

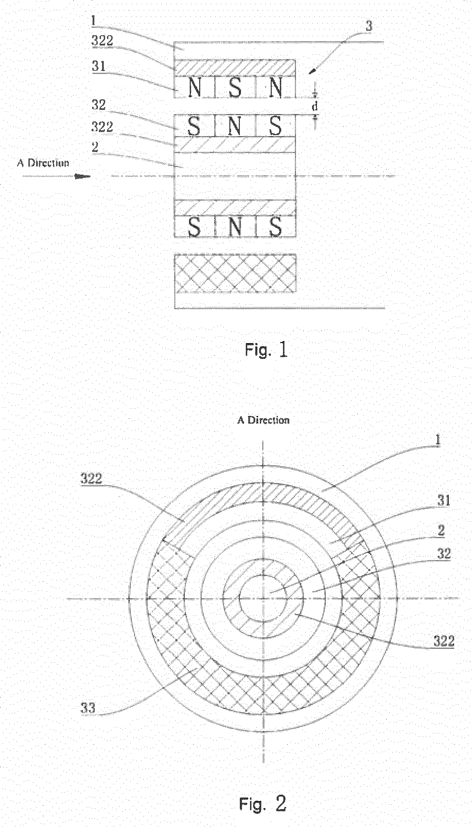

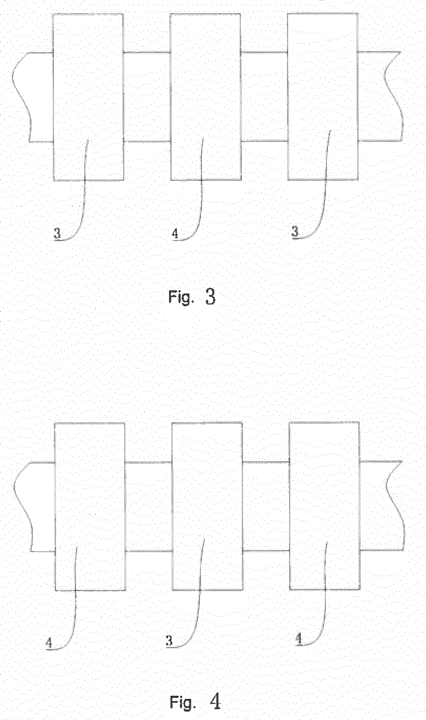

Referring to Fig. 3 and Fig. 4, a radial permanent magnetic suspension bearing having micro-friction or no friction of pivot point according to the present invention comprises a support bearing 4 as pivot point disposed on a horizontal shaft 2, and a permanent magnetic suspension bearing 3 disposed on the horizontal shaft 2 and spaced from the support bearing 4 by an axial distance. Returning to Fig. 1, the permanent magnetic suspension bearing 3 comprises a stator pull-push magnet 31 disposed on a stator casing 1 through a permeability magnetic substrate 322, and a rotor pull-push magnet 32 disposed on the horizontal shaft 2 correspondingly via an annular permeability magnetic substrate 322, having a radial gap d and forming an axial pull-push magnetic circuit with the stator pull-push magnet 31. The rotor pull-push magnet 32 consists of two or more annual permanent magnets axially and closely fitting, with magnetic poles alternately arranged in the axial direction. The stator pull-push magnet 31 consists of two or more partial annular permanent magnets axially and closely fitting, with magnetic poles alternately arranged in the axial direction, disposed over the horizontal panel where the axle center of the horizontal shaft 2 is located, and being symmetrical about the perpendicular bisection plane of the horizontal shaft 2. And upper partial annular permanent magnets and lower annular permanent magnets correspondingly in the same axial position have inverse polarity, and the radial gap is within an effective range of magnetic force of the two pull-push magnets. In Fig. 1, the stator pull-push magnet 31 has three partial annular permanent magnets axially and closely fitting from left to right, with polarities N, S, N respectively; corresponding rotor pull-push magnet 32 also has three annular permanent magnets axially and closely fitting from left to right, with polarities S, N, S respectively. It is possible that the stator pull-push magnet has four partial annular permanent magnets along the axial direction. and corresponding rotor pull-push magnet has four annular permanent magnets along the axial direction; it is also possible that the stator pull-push magnet has two or more than four partial annular permanent magnets along the axial direction, and corresponding rotor pull-push magnet has two or more than four annular permanent magnets with the same number of the partial annular permanent magnets along the axial direction. In Fig. 1, the partial annular permanent magnets and the annular permanent magnets, which are located at a same axial location and corresponds to each other in the up-down direction, have a same axial width. Preferably, the partial annular permanent magnets and the annular permanent magnets, which are located at the same axial location and corresponds to each other in the up-down direction, have a same radial thickness, such that regular loads other than disturbances become zero. Hence, friction and abrasion are remarkably reduced, and the service life thereof is prolonged. Particularly in the case of high-speed machinery, the sizes of the motor and the pump can be remarkably reduced. Preferably, the three partial annular permanent magnets have the same size, that is, each of partial annular permanent magnets axially and closely fitting has same axial width and radial thickness. Preferably, the three annular permanent magnet also have the same size, that is, each of annular permanent magnets axially and closely fitting has the same axial width and radial thickness. Alternatively, the number of the partial annular permanent magnets may be two, or four or more, the number of the annular permanent magnets could be two, or four of more. The permeability magnetic substrate 322 of the stator pull-push magnet 31 matches with the partial annular permanent magnets constituting the stator pull-push magnet 31 in the circumferential direction. Namely, the permeability magnetic substrate 322 of the stator pull-push magnet 31 and the stator pull-push magnet 31 both are partial annular members. The stator pull-push magnet 31 is fixed to the stator casing 1 through the permeability magnetic substrate 322. In the case of application of the present invention as a bearing of a motor, the stator pull-push magnet 31 is fixed to the casing of the motor. Referring to Fig. 2, a complementary annular member 33, which is complementary to the partial annular member constituted by the stator pull-push magnet 31 and the permeability magnetic substrate 322 thereof to form a annular cylinder, is made of non-magnetic material. In this way, the stator pull-push magnet 31 is disposed in the upper part of the horizontal shaft, and hence its weight is greatly reduced. The presence of the pull-push magnetic circuit remarkably increases the effective ratio of the permanently magnetic suspension bearing to the support bearing. The radial gap d may be adjusted, depending on the weight of the shaft and the load, to attain a permanent magnetic suspension force that is equal to the weight of the shaft and the load. In this way, the whole horizontal shaft 2 may be suspended with micro-friction or without friction, and hence the support bearing functions as supporting only in the presence of disturbance.

The permeability magnetic substrates 322 of the two pull-push magnets have the same axial length as the two pull-push magnets 31, 32 fixed on. In this way, the complete working magnetic circuit is guaranteed, and the permanent magnetic suspension force is enhanced.

Preferably, the central angle of the partial annular permanent magnet constituting the stator pull-push magnet ranges from 100° to 160°. Preferably, the central angle is 120°.

Referring to Fig. 3, there exist two said permanent magnetic suspension bearings, which are respectively disposed at two sides of one said support bearing with an axial distance therebetween.

Referring to Fig. 4, there exist two said support bearings, which are respectively disposed at two sides of one said permanent magnetic suspension bearing with an axial distance therebetween.

The permeability magnetic substrate is made of A3 steel, or similar soft magnetic materials. The stator casing 1 is made of stainless steel, or similar non-magnetic materials. The support bearing 4 that simply acts as pivot point may be an oil-lubricating bearing, or a self-lubricating ceramic bearing. Since the bearing load is balanced by the magnetic attraction force of the upward direction, the positive pressure acting on the bearing is zero so as to achieve micro-friction or no friction. In this way, friction and abrasion are eliminated, and therefore energy consumption is remarkably decreased. The bearing is maintenance free, since the friction is decreased to 1/50 and hence the life span of the bearing is prolonged to 50 times. Furthermore, there is no need to replace the bearing. As compared to the prior art magnetic suspension bearings, the magnetic suspension bearing according to the present invention is cheap, and facilitates production and assemble. It can be widely used in various industries with a horizontal shaft transmission to improve production efficiency and working speed, decrease volume, lower production costs and raise economic and social benefits.

## Claims

1. A radial permanent magnetic suspension bearing having micro-friction or no friction of pivot point, comprising a support bearing as pivot point disposed on a horizontal shaft, and a permanent magnetic suspension bearing disposed on the horizontal shaft and spaced from the support bearing by an axial distance, wherein
the permanent magnetic suspension bearing comprises a stator pull-push magnet disposed on a stator casing via a permeability magnetic substrate, and a rotor pull-push magnet disposed on the horizontal shaft correspondingly via a annular permeability magnetic substrate, having a radial gap and forming an axial pull-push magnetic circuit with the stator pull-push magnet; wherein the rotor pull-push magnet consists of two or more annual permanent magnets axially and closely fitting, with magnetic poles alternately arranged in the axial direction; wherein the stator pull-push magnet consists of two or more partial annular permanent magnets axially and closely fitting, with magnetic poles alternately arranged in the axial direction, disposed over the horizontal panel where the axle center of the horizontal shaft is located, and being symmetrical about the perpendicular bisection plane of the horizontal shaft; and wherein the partial annular permanent magnets and the annular permanent magnets, which are located at a same axial location and corresponds to each other in the up-down direction, have opposite polarities; and the radial gap is within an effective range of magnetic force of the two pull-push magnets; the permeability magnetic substrate of said stator pull-push magnet matches with the partial annular permanent magnets constituting said stator pull-push magnet in the circumferential direction; a complementary annular member, which is complementary to a partial annular member constituted by the stator pull-push magnet and the permeability magnetic substrate thereof to form a annular cylinder, is made of non-magnetic material.

2. The radial permanent magnetic suspension bearing having micro-friction or no friction of pivot point according to Claim 1, wherein the partial annular permanent magnets and the annular permanent magnets, which are located at a same axial location and corresponds to each other in the up-down direction, have a same axial width.

3. The radial permanent magnetic suspension bearing having micro-friction or no friction of pivot point according to Claim 1 or Claim 2, wherein the partial annular permanent magnets and the annular permanent magnets, which are located at a same axial location and corresponds to each other in the up-down direction, have a same radial thickness.

4. The radial permanent magnetic suspension bearing having micro-friction or no friction of pivot point according to any of Claim 1 to Claim 3, wherein the axial lengths of the permeability magnetic substrates of the two pull-push magnets equal to the axial lengths of the two pull-push magnets fixed thereon, respectively.

5. The radial permanent magnetic suspension bearing having micro-friction or no friction of pivot point according to any of Claim 1 to Claim 4, wherein the central angle of the partial annular permanent magnet constituting the stator pull-push magnet ranges from 100° to 160°.

6. The radial permanent magnetic suspension bearing having micro-friction or no friction of pivot point according to Claim 5, wherein said central angle is 120°.

7. The radial permanent magnetic suspension bearing having micro-friction or no friction of pivot point according to any of Claim 1 to Claim 6, wherein there exist two said support bearings, which are respectively disposed at two sides of one said permanent magnetic suspension bearing with the axial distance therebetween.

8. The radial permanent magnetic suspension bearing having micro-friction or no friction of pivot point according to any of Claim 1 to Claim 6, wherein there exist two said permanent magnetic suspension bearings, which are respectively disposed at two sides of one said support bearing with the axial distance therebetween.

9. The radial permanent magnetic suspension bearing having micro-friction or no friction of pivot point according to any of Claim 1 to Claim 8, wherein there exist three or four said annular permanent magnets, and there exist three or four corresponding partial annular permanent magnets.

10. The radial permanent magnetic suspension bearing having micro-friction or no friction of pivot point according to any of Claim 1 to Claim 9, wherein the permeability magnetic substrate is made of soft magnetic material, preferably, made of A3 steel.

11. The radial permanent magnetic suspension bearing having micro-friction or no friction of pivot point according to any of Claim 1 to Claim 10, wherein each of said partial annular permanent magnets axially and closely fitting has a same axial width and radial thickness; and each of said annular permanent magnets axially and closely fitting has a same axial width and radial thickness.

12. A permanent magnetic suspension bearing, comprising a stator pull-push magnet disposed on a stator casing via a permeability magnetic substrate, and a rotor pull-push magnet disposed on the horizontal shaft correspondingly via a annular permeability magnetic substrate, having a radial gap and forming an axial pull-push magnetic circuit with the stator pull-push magnet,
wherein the rotor pull-push magnet consists of two or more annual permanent magnets axially and closely fitting, with magnetic poles alternately arranged in the axial direction; the stator pull-push magnet consists of two or more partial annular permanent magnets axially and closely fitting, with magnetic poles alternately arranged in the axial direction, disposed over the horizontal panel where the axle center of the horizontal shaft is located, and being symmetrical about the perpendicular bisection plane of the horizontal shaft, and wherein the partial annular permanent magnets and the annular permanent magnets, which are located at a same axial location and corresponds to each other in the up-down direction, have opposite polarities, and the radial gap is within an effective range of magnetic force of the two pull-push magnets; the permeability magnetic substrate of said stator pull-push magnet matches with the partial annular permanent magnets constituting said stator pull-push magnet in the circumferential direction; a complementary annular member, which is complementary to a partial annular member constituted by the stator pull-push magnet and the permeability magnetic substrate thereof to form a annular cylinder, is made of non-magnetic material.

13. The permanent magnetic suspension bearing having micro-friction or no friction of pivot point according to Claim 12, wherein the partial annular permanent magnets and the annular permanent magnets, which are located at a same axial location and corresponds to each other in the up-down direction, have a same axial width.

14. The permanent magnetic suspension bearing having micro-friction or no friction of pivot point according to Claim 12 or Claim 13, wherein the partial annular permanent magnets and the annular permanent magnets, which are located at a same axial location and corresponds to each other in the up-down direction, have a same radial thickness.

15. The permanent magnetic suspension bearing having micro-friction or no friction of pivot point according to any of Claim 12 to Claim 14, wherein the axial lengths of the permeability magnetic substrates of the two pull-push magnets equal to the axial lengths of the two pull-push magnets fixed thereon, respectively.

16. The permanent magnetic suspension bearing having micro-friction or no friction of pivot point according to any of Claim 12 to Claim 15, wherein the central angle of the partial annular permanent magnet constituting the stator pull-push magnet ranges from 100° to 160°.
